# EUROPEAN PATENT APPLICATION

(11) **EP 4 417 417 A1**
(43) Date of publication of application: **21.08.2024**
(21) Application number: 23158780.9
(22) Date of filing: 27.02.2023
(51) Int. Cl.: B32B 27/06, B32B 5/18, B32B 27/08, B32B 27/18, B32B 27/22, B32B 27/30, B32B 27/40, D06N 3/00

(54) **MULTI-LAYERED HYBRID COMPOSITE MATERIAL, METHOD OF OBTAINING AND USES THEREOF**

(30) Priority: 14.02.2023 PT 2023118512
(71) Applicant: TMG - Tecidos Plastificados e Outros Revestimentos para a Indústria Automóvel, S.A., 4770-583 S. Cosme do Vale, V. N. Famalicão (PT)
(72) Inventor: PORTELA DE LEMOS, ANA FRANCISCA, 4770-583 VILA NOVA DE FAMALICÃO (PT); DA SILVA RIBEIRO, FILIPE MIGUEL, 4770-583 VILA NOVA DE FAMALICÃO (PT); PEREIRA DA COSTA AGUILAR RIBEIRO, HELENA ISABEL, 4770-583 VILA NOVA DE FAMALICÃO (PT); GONÇALVES LOBO, MARIA IRENE, 4770-583 VILA NOVA DE FAMALICÃO (PT); FERREIRA DA MOTA, JOÃO NUNO, 4770-583 VILA NOVA DE FAMALICÃO (PT); SILVA MAGALHÃES, MARIA JULIETA, 4770-583 VILA NOVA DE FAMALICÃO (PT)
(74) Representative: Patentree

(57) **Abstract**

The present disclosure relates to a multi-layered composite material comprising at least two layers, wherein at least one of said layers comprises a mixture of polyvinyl chloride (PVC) and polyurethane (PUR), wherein the polyurethane comprises polyester units. An article comprising said multi-layered composite material, and the use of said multi-layered composite material as an artificial leather on applications that require crack resistance, flexibility, and fatigue resistance, in particular its use in automotive applications is also disclosed.

## Description

### TECHNICAL FIELD

The present disclosure relates to a multi-layered polymer-based artificial leather material, comprising at least one hybrid layer comprising polyvinyl chloride (PVC) and polyurethane (PUR). The multi-layered PVC-based material may be used in the automotive industry, namely in car upholstery such as door panels, seats, interior trims, among others.

### BACKGROUND

Upholsteries, in particular on the automobile industry, are typically made from natural leather as it is associated to a higher mechanical performance, namely flexural strength, and chemical resistance Therefore, natural leather is considered as a material of election for upholsteries, but it presents a high price.

As alternative, the market of PVC applied to upholsteries, namely those applied in car interiors, increased, due to the optimization of the formulations, to its versatility, in particular greater versatility in terms of aesthetic effects such as 3D superficial patterns, and also due to its reduced cost. This fact has promoted the use of PVC as artificial leather in applications which are traditionally obtained from natural leather.

However, the artificial leather products prepared from 100% PVC often need the addition of a plasticizer that can easily migrate from the product to the user. Indeed, the most used plasticizers in formulations with PVC resins are phthalates, due to their high efficiency in plasticizing PVC. However, low molecular weight (LMW) phthalates demonstrate several toxicity problems. According to Registration, Evaluation, Authorization of CHemicals (REACH), LMW phthalate plasticizers are classified as substances of high concern. The alternatives to these plasticizers are high molecular weight (HMW) phthalates, which are the plasticizers more used in the automotive industry. In the HMW phthalates class, the most consumed are plasticizers with alkyl chains from C9 to C13, such as di-isononyl phthalate (DINP), di-isodecyl phthalate (DIDP), among others. Although HMW phthalate plasticizers have no toxicity issues, there is market pressure to find alternatives to phthalates due to the bad reputation of LMW phthalates.

As result, the market is moving towards new alternatives to 100% PVC-based products that can withstand abrasion, contact with chemical products (such as body lotions, cosmetics, cleaning products), exposure to external environmental factors (such as different humidity conditions, temperature, light), and with that be applied in different car applications, such as seats.

Document EP3310569 refers to a flexible composite material, method of obtention and uses thereof, wherein said flexible composite material shows a surprising resistance to tear, fissure and/or breaking in conditions of extreme use, namely presence of oils and low temperatures. Particularly, the flexible composite material comprises the following layers: a support layer; an intermediate layer of polyvinyl chloride (PVC), containing a plurality of sublayers; and a compact layer of thermoplastic polyurethane (TPU), containing a plurality of sublayers, wherein the TPU compact layer comprises 0.4 - 70% w/w of an aromatic TPU and 0.2 - 35% w/w of an aliphatic TPU. Said flexible material can be used in the production of upholsteries, namely upholsteries for the automobile industry, in particular automobile seats. Although the claimed material comprises PVC and polyurethane, the used polyurethane is a TPU, and the PVC and TPU polymers are in separate layers, therefore not as a mixture based on a dispersion comprising both polymers, but in a layered hybrid structure.

Document EP2875058 relates to a composite sheet material, comprising at least the following layers: a textile support layer, a laminating layer which is connected to the textile support layer, a polyurethane intermediate layer based on an unblocked high-solid polyurethane system and a polyurethane cover layer. However, this document is silent regarding composite sheet materials comprising a layer prepared from a PVC/PUR dispersion.

Document DE102013003446 describes a composite material comprising a top layer of solidified polyurethane dispersion or solidified polyurethane, middle layer joined to top layer and having as e.g., a PVC layer, and support layer joined with the middle layer.

These facts are disclosed in order to illustrate the technical problem addressed by the present disclosure.

### GENERAL DESCRIPTION

The present disclosure relates to a multi-layered composite material comprising at least two layers, wherein at least one of said layers comprises a mixture of polyvinyl chloride, PVC, and polyurethane, PUR, wherein the polyurethane comprises polyester (PES) polyol units.

In an embodiment, the mixture of PVC and PUR comprises 20 to 99 % (w/w) of PVC and 1 to 80% (w/w) of PUR, preferably 30 to 96 % (w/w) of PVC and 4 to 70% (w/w) of PUR; more preferably 50 to 90 % (w/w) of PVC and 10 to 50 % (w/w) PVC.

In an embodiment, the PUR further comprises a polyol unit selected from a list comprising polycarbonate (PC), polyether (PE), or mixtures thereof.

In an embodiment for better results, at least 0.5% of the polyol units of PUR are polyester polyol units; preferably 1% (units/total polyol units) of the polyol units of PUR are polyester polyol units; more preferably 5% (units/total polyol units) of the polyol units of PUR are polyester polyol units; even more preferably 10% (units/total polyol units) of the polyol units of PUR are polyester polyol units.

In an embodiment for better results, the PUR comprises a solid (for ex: solid particles) content of at least of 10% (w/w).

In an embodiment for better results, the multi-layered composite material further comprises an additive. In another embodiment, the multi-layered composite material comprises up to 50 % (w/w) of the additive. In a preferred embodiment, the multi-layered composite material comprises 0.1 to 35% (w/w) of the additive, more preferably 0.1 to 15 % (w/w) of the additive.

In an embodiment for better results, the additive is selected from a list comprising dyes, pigments, plasticizers, stabilizers, filers, auxiliary substances, UV stabilizers, fire-retardants, or mixtures thereof.

In an embodiment for better results, at least one of the at least two layers is a foam layer.

In an embodiment for better results, at least one of the at least two layers is a compact layer.

In an embodiment for better results, the density of the compact layer ranges from 900 to 1200 kg/m³.

In an embodiment for better results, the multi-layered composite material further comprises a topcoat lacquer layer, a basecoat lacquer layer, an adhesive layer, a textile layer, or combinations thereof.

In an embodiment for better results, the composition of the compact layer comprises 50 to 70% (w/w) of PUR. In another embodiment, the composition of the foam layer comprises 15 to 50% (w/w) of PUR. In yet another embodiment, the adhesive layer comprises 0 to 15% (w/w) of PUR.

In an embodiment for better results, the thickness of the layer comprising the mixture of PVC and PUR ranges from 0.05 to 0.8 mm, preferably 0.1-0.5 mm.

In an embodiment for better results, the multi-layered composite material is a flexible material.

An aspect of the present disclosure relates to an article comprising the disclosed multi-layered composite material.

In an embodiment, the article is an upholstery article, or a seat, or door panel, or automotive interior trim.

Another aspect of the present disclosure relates to the use of the disclosed multi-layered composite material as artificial leather.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of the multi-layered composite material, comprising a topcoat lacquer, a basecoat lacquer, two compact layers of a PVC/PUR mixture, an adhesive layer of PVC or PUR, and a textile. PVC - polyvinyl chloride; PUR - polyurethane.
**Figure 2****:** Schematic representation of an embodiment of the multi-layered composite material, comprising a topcoat lacquer, a basecoat lacquer, one compact layer of PVC or PUR, a compact layer of PVC/PUR mixture, an adhesive layer of PVC or PUR, and a textile. PVC - polyvinyl chloride; PUR - polyurethane.
**Figure 3****:** Schematic representation of an embodiment of the multi-layered composite material, comprising a topcoat lacquer, a basecoat lacquer, compact layer of PVC/PUR mixture, one compact layer of PVC or PUR, an adhesive layer of PVC or PUR, and a textile. PVC - polyvinyl chloride; PUR - polyurethane.
**Figure 4****:** Schematic representation of an embodiment of the multi-layered composite material, comprising a topcoat lacquer, a basecoat lacquer, a compact layer of PVC/PUR mixture, a foam layer of PVC/PUR mixture, an adhesive layer of PVC or PUR, and a textile. PVC - polyvinyl chloride; PUR - polyurethane.
**Figure 5****:** Schematic representation of an embodiment of the multi-layered composite material, comprising a topcoat lacquer, a basecoat lacquer, a compact layer (PVC or PUR), a foam layer of PVC/PUR mixture, an adhesive layer of PVC or PUR, and a textile. PVC - polyvinyl chloride; PUR - polyurethane.
**Figure 6****:** Schematic representation of an embodiment of the multi-layered composite material, comprising a topcoat lacquer, a basecoat lacquer, a compact layer of PVC/PUR mixture, a foam layer (PVC or PUR), an adhesive layer of PVC or PUR, and a textile. PVC - polyvinyl chloride; PUR - polyurethane.
**Figure 7****:** Schematic representation of an embodiment of the multi-layered composite material, comprising two compact layers of a PVC/PUR mixture. PVC - polyvinyl chloride; PUR - polyurethane.

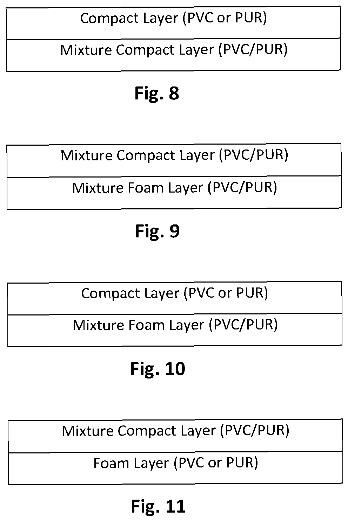

**Figure 8****:** Schematic representation of an embodiment of the multi-layered composite material, comprising one compact layer of PVC or PUR, and a compact layer of PVC/PUR mixture. PVC - polyvinyl chloride; PUR - polyurethane.
**Figure 9****:** Schematic representation of an embodiment of the multi-layered composite material a compact layer of PVC/PUR mixture, and a foam layer of PVC/PUR mixture. PVC - polyvinyl chloride; PUR - polyurethane.
**Figure 10****:** Schematic representation of an embodiment of the multi-layered composite material, comprising a compact layer (PVC or PUR), and a foam layer of PVC/PUR mixture. PVC - polyvinyl chloride; PUR - polyurethane.
**Figure 11****:** Schematic representation of an embodiment of the multi-layered composite material a compact layer of PVC/PUR mixture, and a foam layer (PVC or PUR). PVC - polyvinyl chloride; PUR - polyurethane.

### DETAILED DESCRIPTION

The present disclosure relates to a multi-layered composite material, comprising at least two layers wherein at least one of said layers comprises a mixture of polyvinyl chloride (PVC) and polyurethane (PUR), wherein the polyurethane comprises polyester units. An article comprising said multi-layered composite material, and the use of said multi-layered composite material as an artificial leather on applications that require crack resistance, flexibility, and fatigue resistance, in particular its use in automotive applications is also disclosed.

For the scope and interpretation of the present disclosure, a layer comprising said composition comprising a mixture of PVC and PUR is regarded interchangeably as a "hybrid polymeric layer", "hybrid layer" or as "hybrid PVC/PUR material".

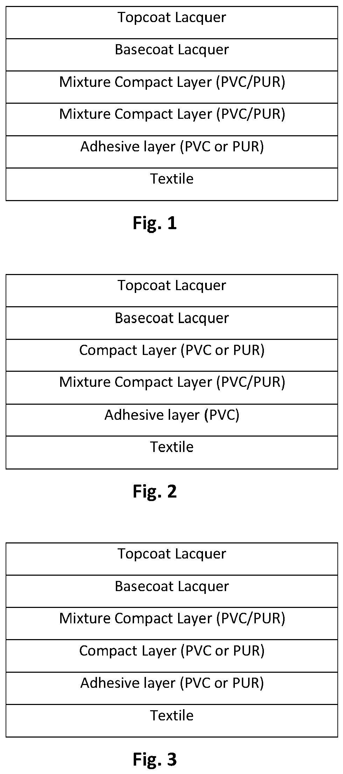

In an embodiment, the multi-layered composite material comprises a topcoat lacquer, a basecoat lacquer, two compact layers of a PVC/PUR mixture, an adhesive layer of PVC or PUR, and a textile (Figure 1).

In another embodiment, the multi-layered composite material comprises a topcoat lacquer, a basecoat lacquer, one compact layer of PVC or PUR, a compact layer of PVC/PUR mixture, an adhesive layer of PVC or PUR, and a textile (Figure 2).

In another embodiment, the multi-layered composite material comprises a topcoat lacquer, a basecoat lacquer, a compact layer of PVC/PUR mixture, one compact layer of PVC or PUR, an adhesive layer of PVC or PUR, and a textile (Figure 3).

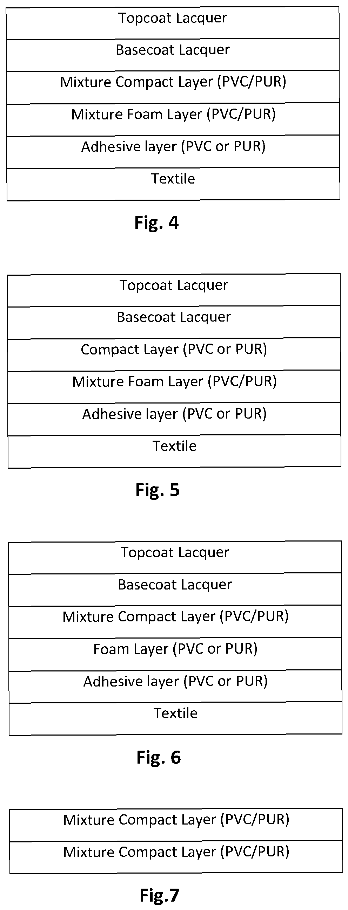

In another embodiment, the multi-layered composite material comprises a topcoat lacquer, a basecoat lacquer, a compact layer of PVC/PUR mixture, a foam layer of PVC/PUR mixture, an adhesive layer of PVC or PUR, and a textile. PVC - polyvinyl chloride; PUR - polyurethane (Figure 4).

In another embodiment, the multi-layered composite material comprises a topcoat lacquer, a basecoat lacquer, a compact layer (PVC or PUR), a foam layer of PVC/PUR mixture, an adhesive layer of PVC or PUR, and a textile (Figure 5).

In another embodiment, the multi-layered composite material comprises a topcoat lacquer, a basecoat lacquer, a compact layer of PVC/PUR mixture, a foam layer (PVC or PUR), an adhesive layer of PVC or PUR, and a textile (Figure 6).

For the scope and interpretation of the present disclosure the term "basecoat lacquer" refers to an adhesive lacquer suitable to be added directly to the polymeric layer; the term "topcoat lacquer" refers to a lacquer placed at the outmost end of the multi-layered composite, suitable to be in contact with a user.

In the state of the art, the stability of the multi-layered composite material may be measured by many methods. In an embodiment, the stability of the disclosed multi-layered composite material was assessed by heat aging tests, cold resistance tests, fatigue resistance, interlayer adhesion (ISO 2411:2017) and soiling.

In an embodiment, the disclosed multi-layered composite material is stable, and shows improved properties, such as less plasticizer migration and better fatigue resistance, when compared with materials based only in PVC, and better flexibility when compared with PUR-based materials.

In an embodiment, the disclosed hybrid PVC/PUR materials showed superior mechanical properties, as they are more flexible and show higher fatigue resistance, as compared to PVC-based formulations. Thus, the disclosed multi-layered composite material can be used in several parts of the car interior, with longer durability than full PVC materials. For instance, the disclosed materials can be used in car seats, seat back, automotive interior trims, among others, where the materials are more exposed to mechanical stress, abrasion, contact with chemical products (such as body lotions, cosmetics, cleaning products), and exposure to external environmental factors (such as different humidity conditions, temperature, light). This surprising effect is due to (1) the chemical affinity between the different layers, caused by the presence of ester functional groups that promote the bonding between the PVC and the PUR; and (2) less migration of plasticizers from the hybrid PVC/PUR layer to the lacquer layers by mixing PVC and PUR within the same layer. The -NCO functional groups of polyurethane can react with the -OH groups present in the plasticizers, resulting in the formation of a more cohesive polymeric network that hinders the migration of the plasticizer to the interface with the lacquers. Therefore, the plasticizer is better retained in the hybrid layer, which decreased its availability for migration and does not affect the surface properties of the multi-layered composite material.

In an embodiment for better results, the layer of PVC/PUR mixture comprises a composition comprising PVC and PUR (PVC/PUR), wherein the PUR comprises polyester polyol units. In a further embodiment, the PVC/PUR mixture is a dispersion of a PVC paste formulation, comprising PVC and additives, in a PUR paste formulation, comprising PUR and additives. In an embodiment, the additive is selected from a list comprising dyes, pigments, plasticizers, stabilizers, filers, auxiliary substances, UV stabilizers, fire-retardants, crosslinkers, or mixtures thereof. In a further embodiment, the multi-layered composite material comprises up to 50 % (w/w) of the additive. In a preferred embodiment, the multi-layered composite material comprises 0.1 to 35% (w/w) of the additive, more preferably 0.1 to 15 % (w/w) of the additive.

A plastisol is a colloidal dispersion of PVC particles in a liquid plasticizer. Suitable plasticizers include phthalates, trimillitates, adipates, sebacates, citrates, 1,2-cyclohexanedicarboxylic acid diisononyl esters, non-aromatic cyclic ester compounds such as DINCH, dioctyl terephthalate (DOTP), epoxy plasticizers, oligoglycol or polyethylene glycol-based plasticizers, castor oil-based plasticizers and phosphate plasticizers, brominated plasticizers, sulfate plasticizers, polymeric plasticizers, ionic liquids or mixtures thereof.

In an embodiment, the presence of polyester polyol units of the PUR allows for better UV, flexibility, temperature and chemical resistance properties, as well as, a chemical linkage between the PVC and the PUR chains.

For the scope and interpretation of the present disclosure, a "foam layer" refers to a porous layer comprising a foaming agent, such as chemical and/or physical blowing agent, or microspheres; and a "compact layer" refers to a layer prepared without foaming agents.

In an embodiment, the multi-layered composite material comprises a support layer. In a further embodiment, the support layer comprises textile, knitted fabric, spacer fabric, nonwoven fabric, woven fabric, natural fibers, or a combination thereof. In another embodiment, the support layer may comprise or consist of one or more kinds of fibres selected from the group comprising polyester, cotton, other natural fibres, or a combination of thereof.

In an embodiment, the multi-layered composite material is produced through a coating process, with PVC, or PUR or PVC/PUR fluid paste deposition, prepared beforehand, supported by silicone-treated paper, in a continuous form, roll-to-roll process. In a further embodiment, the multi-layered materials were prepared through layer-by-layer deposition of each of the layers using a knife coating technique.

In an embodiment, the multi-layered material was prepared through the sequential coating/enduction of each of the layers, wherein each of the layers was cured before the deposition of the subsequent layer. In particular, the compact layers were cured at a temperature between 188-204 °C, preferably 193-199 °C; and foam layers were cured at a temperature between 182-188 °C.

In an embodiment, the foam layer, or foamed layer, was produced by the incorporation of chemical and/or physical blowing agents or microspheres, preferably ADCA free. In a further embodiment, the foam layer was produced by the incorporation of expandable microspheres or sodium bicarbonate-based blowing agents. In an embodiment, the density of the foam layer is less than 1250 kg/m³, preferably less than 800 kg/m³ and more preferably less than 700 kg/m³.

### Example:

In an embodiment, the multi-layered composite material comprises a textile layer, an adhesive layer, a foam layer comprising a PVC/PUR mixture, a hybrid (PVC/PUR) compact layer, a basecoat lacquer and a topcoat lacquer (schematic represented in Figure 4). A multi-layered material prepared with 100% (w/w) PVC was used as comparative example ("Reference"). The PVC/PUR mixture is a dispersion of a PVC paste formulation comprising PVC and additives in a PUR paste formulation comprising PUR and additives. The composition of the multi-layered materials is listed in Table 1.

**Table 1 - Weight composition of the different layers comprised in the multi-layered reference material and hybrid (PVC/PUR) material.**

| | **Reference** | **PVC paste/PUR paste* (%, w/w)** |
|---|---|---|
| **Compact layer** | 100% PVC | 50/50 |
| **Foam layer** | 100% PVC | 85/15 |
| **Adhesive layer** | 100% PVC | 85/15 |

| | | |
|---|---|---|
| *PUR where 0.5% of the polyols units of PUR are polyester polyol units. | | |

In an embodiment, the multi-layered materials listed on Table 1 were tested regarding heat aging (DIN EN 12280-1:1997), cold resistance (VDA 230-225 5.1.2.2 and 5.2.4.5:2014), fatigue resistance and soiling (DIN EN 60068-2-70:1995); results are presented in Table 2.

In an embodiment, the fatigue resistance of the material was evaluated after submitting the specimen to 8,000 dynamic elongation cycles at -10 °C, under a load of 20N and reduced degree of stretch of the specimen (4%). The result is expressed as the sum of the cracks length. This test simulates the wear resistance in seat applications.

**Table 2 - Results of heat aging, cold resistance, fatigue resistance and soiling for the comparative example ("Reference") and the hybrid (PVC/PUR) material.**

| **PROPERTY** | **Target value (grade)** | **Reference (PVC 100%)** | **PVC/PUR of the present disclosure** |
|---|---|---|---|
| **Heat Aging 240h at 100°C** | >4 | 3 | 4.5 |
| **Cold resistance -30°C T** | 0 | 3.0 | 4.33 |
| **Cold Resistance -30°C TR** | 0 | 3.0 | 0 |
| **Fatigue resistance -10°C** | 0 | 3.0 | 0 |
| **Soiling** | > 3 | 2.5 | 3.4 |

| | | | |
|---|---|---|---|
| T and TR are related with the direction of coating. T - measurement in the direction that the material has been coated, i.e., in the longitudinal direction of the sample; TR - measurement in a sample cut transversally to the direction that the material is coated, i.e., transversal direction of the sample. | | | |

Surprisingly, the multi-layered composite material of the present disclosure (this is the hybrid (PVC/PUR) material) showed a better performance in all tested parameters, as compared to the reference material. As shown in Table 2, the results obtained for the multi-layered comprising PVC/PUR layers are closer to the ideal results for each test ("ideal conditions"), showing that the disclosed multi-layered materials are more resistant to abrasion and exposure to environmental conditions, among others, leading to an increased longevity of the material and products comprising said material.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

## Claims

1. A multi-layered composite material comprising at least two layers, wherein at least one of said layers comprises
a mixture of polyvinyl chloride, PVC, and polyurethane, PUR,
wherein the polyurethane comprises polyester polyol units.

2. The multi-layered composite material according to the previous claim wherein the mixture of PVC and PUR comprises
20 to 99 % (w/w) of PVC and 1 to 80 % (w/w) of PUR, preferably 30 to 96 % (w/w) of PVC and 4 to 70 % (w/w) of PUR.

3. The multi-layered composite material according to any of the previous claims wherein the PUR further comprises a polyol unit selected from a list comprising polycarbonate, polyether or mixtures thereof.

4. The multi-layered composite material according to any of the previous claims wherein at least 0.5% (units/total polyol units) of the polyol units of PUR are polyester polyol units; preferably 1% (units/total polyol units) of the polyol units of PUR are polyester polyol units; more preferably 5% (units/total polyol units) of the polyol units of PUR are polyester polyol units; even more preferably 10 % (units/total polyol units) of the polyol units of PUR are polyester polyol units.

5. The multi-layered composite material according to any of the previous claims wherein the PUR comprises a solid content of at least of 10% (w/w).

6. The multi-layered composite material according to any of the previous claims further comprising an additive, preferably wherein the additive is selected from a list comprising dyes, pigments, plasticizers, stabilizers, filers, auxiliary substances, UV stabilizers, fire-retardants, or mixtures thereof.

7. The multi-layered composite material according to the previous claim comprising up to 50 % (w/w) of the additive, preferably 0.1 to 35% (w/w) of the additive, more preferably 0.1 to 15 % (w/w) of the additive.

8. The multi-layered composite material according to any of the previous claims further comprising a plasticizer, preferably wherein the plasticizer is selected from a list comprising phthalates, trimillitates, adipates, sebacates, citrates, 1,2-cyclohexanedicarboxylic acid diisononyl esters, non-aromatic cyclic ester compounds such as DINCH, dioctyl terephthalate (DOTP), epoxy plasticizers, oligoglycol or polyethylene glycol-based plasticizers, castor oil-based plasticizers and phosphate plasticizers, Brominated plasticizers, sulfate plasticizers, polymeric plasticizers, ionic liquids or mixtures thereof.

9. The multi-layered composite material according to any of the previous claims wherein at least one of the at least two layers is a foam layer and/or wherein at least one of the at least two layers is a compact layer.

10. The multi-layered composite material according to the previous claim wherein the density of the compact layer ranges from 900 to 1200 kg/m³.

11. The multi-layered composite material according to any of the previous claims further comprising a topcoat lacquer layer, a basecoat lacquer layer, an adhesive layer, a textile layer, or combinations thereof.

12. The multi-layered composite material according to any one of the previous claims, wherein the thickness of the layer comprising the mixture of PVC and PUR ranges from 0.05 to 0.8 mm, preferably 0.1-0.5 mm.

13. The multi-layered composite material according to any of the previous claims wherein the multi-layered composite material is a flexible material.

14. An article comprising a multi-layered composite material as described in any of the previous claims, preferably wherein said article is an upholstery article, or a seat, or door panel, or automotive interior trim.

15. Use of a multi- layered composite material as described in any of the previous claims 1-13 as artificial leather.
